# EUROPÄISCHE PATENTANMELDUNG

(11) **EP 1 715 295 A1**
(43) Veröffentlichungstag der Anmeldung: **25.10.2006**
(21) Anmeldenummer: 06112165.3
(22) Anmeldetag: 03.04.2006
(51) Int. Cl.: G01C 21/26, G06F 17/30, G06D 1/02

(54) **Verfahren zum Einfügen und/oder zum Aktualisieren und/oder zum Ergänzen von Detailinformationen in digitalen Karten**

(30) Priorität: 19.04.2005 DE 102005018083
(71) Anmelder: ROBERT BOSCH GMBH, 70442 Stuttgart (DE)
(72) Erfinder: Hessling, Matthias, 31141, Hildesheim (DE); Schneebauer, Christina, 31141, Hildesheim (DE)

(57) **Zusammenfassung**

Um ein Verfahren zum Einfügen und/oder zum Aktualisieren und/oder zum Ergänzen von Detailinformationen in einer digitalen Karte mindestens eines Empfängers, der zum Kommunizieren mit mindestens einem Sender ausgelegt ist, so weiterzuentwickeln, dass dieses Verfahren sowohl von den IDs der Karten bei Sender und Empfänger als auch von einer anbieterseitigen Kenntnis des aktuellen Zustands der zu ändernden Karte unabhängig ist, werden folgende Schritte vorgeschlagen:
[a] Defmieren, insbesondere Auswählen, mindestens eines in die Karte des Empfängers einzufügenden und/oder in der Karte des Empfängers zu aktualisierenden und/oder in der Karte des Empfängers zu ergänzenden Gebiets (110);
[b] Senden der Detailinformationen des definierten Gebiets (110), insbesondere der Gebietsbeschreibung mittels Referenzstellen (14) und/oder mittels des durch die Referenzstellen (14) definierten Polygons (200), an den Empfänger;
[c] Einfügen zumindest eines Teils der vom Sender gesendeten Detailinformationen in die Karte des Empfängers innerhalb des definierten Gebiets (110) und/oder Aktualisieren bzw. Ergänzen zumindest eines Teils der Detailinformationen in der Karte des Empfängers mittels der vom Sender gesendeten Detailinformationen innerhalb des definierten Gebiets (110).

## Beschreibung

### Technisches Gebiet

Die vorliegende Erfindung betrifft ein Verfahren zum Einfiigen und/oder zum Aktualisieren und/oder zum Ergänzen von Detailinformationen in einer digitalen Karte gemäß dem Oberbegriff des Anspruchs 1.

### Stand der Technik

Zur Unterstützung des Navigierens, zum Beispiel in Kraftfahrzeugen, werden in zunehmendem Maße digitale Karten eingesetzt. Die in einer Karte gespeicherten geographischen Informationen werden dabei je nach Anbieter intern auf verschiedene Weisen repräsentiert.

Bei Kenntnis der internen Repräsentationsform sowie des aktuellen Zustands einer digitalen Karte kann diese gezielt aktualisiert oder ergänzt werden. Dabei kann auf in der Karte bereits vorhandene Datenelemente Bezug genommen werden, beispielsweise durch persistente, eindeutige Identifikatoren (sogenannte IDs).

Eine digitale Karte wird normalerweise organisiert, indem alle Datenelemente in der Datenbank oder auf einer Compact Disc (CD) eine eindeutige Identifikation (ID) tragen (vgl. hierzu beispielsweise die Druckschriften DE 103 18 615 A1, DE 10 2004 001 797 A1 oder EP 1 403 837 A1 aus dem Stand der Technik).

Zur Änderung dieser Datenbank der digitalen Karte sind also die bestehenden, durch IDs identifizierten Daten zu ergänzen, zu löschen oder zu ändern, wie zum Beispiel in der Druckschrift DE 102 00 375 A1 aus dem Stand der Technik beschrieben.

Der aktuelle Stand der digitalen Karte in Bezug auf IDs müsste also einem Anbieter für Karten-Updates bekannt sein, um richtige IDs zur Änderung der Daten zu verwenden. Ein Update müsste also stets in einer definierten Release-Reihenfolge geschehen bzw. der Anbieter müsste den Zustand des Anfragenden mitgeteilt bekommen, wie beispielsweise in den Druckschriften EP 1 385 102 A2 oder EP 1 464 922 A1 aus dem Stand der Technik beschrieben wird.

Dies bringt wie in verschiedenen realisierten Systemen einen hohen administrativen Aufwand und ein sehr komplexes Austauschprotokoll zwischen Anbieter und Kunde mit sich. Beispiele hierfür sind Updates von Betriebssystemen der Firma Microsoft, Updates der Software von T-Online oder feste Zyklen bei der Ausgabe von CDs mit digitalen Karten; in letzterem Falle erfolgten Updates bislang nur durch Lieferung ganzer Karten.

Bei Kenntnis der internen Repräsentationsform können zu löschende Datenelemente identifiziert werden, und neu hinzuzufügende Datenelemente können zu bereits vorhandenen Datenelementen in Bezug gesetzt und dadurch in die Karte eingepasst werden.

Zur kontextfreien Bezugnahme auf geographische Datenelemente oder auf geographische Entitäten ohne Rückgriff auf interne Repräsentationsformen einzelner digitaler Karten sind sogenannte Location-Referenzen, beispielsweise im AGORA-Format, bekannt.

Diese AGORA-Location-Referenzen sind nicht-permanent gespeicherte, on-the-fly generierte Datensätze, die Eigenschaften oder Features, wie etwa Straßenkreuzungen, Points of Interest oder dergleichen, beschreiben, die mit hoher Sicherheit in den digitalen Karten des Senders und des Empfängers wiedergefunden werden können.

Eine solche Location-Referenz beschreibt die geographische Entität, das heißt die geographischen Daten oder Datenelemente, beispielsweise unter Verwendung ihrer Koordinaten sowie der Koordinaten benachbarter oder mit ihr verbundener weiterer Datenelemente, mit dem Ziel, ihre Auffindbarkeit in einer beliebigen digitalen Karte mit möglichst hoher Sicherheit zu gewährleisten.

Es ist weiterhin bekannt, mittels Referenzpunkten oder Stützpunkten ein aneinander gereihtes Polygon zu definieren, das ein bestimmtes Gebiet in einer digitalen Karte beschreibt.

Die bekannten Verfahren zur Einfügung und/oder zur Aktualisierung und/oder zur Ergänzung digitaler Karten haben den Nachteil, dass die Notwendigkeit einer Kenntnis der IDs und des aktuellen Zustands der Karte die Flexibilität des Vorgangs erheblich einschränkt; weder ist eine freie Auswahl zwischen verschiedenen, unterschiedliche Repräsentationsformen verwendenden Anbietern möglich noch können individuell einzelne Kartenbereiche aktualisiert werden.

### Darstellung der Erfmdung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzuentwickeln, dass dieses Verfahren sowohl von den IDs der Karten bei Sender und Empfänger als auch von einer anbieterseitigen Kenntnis des aktuellen Zustands der zu ändernden Karte unabhängig ist.

Diese Aufgabe wird gemäß der Lehre der vorliegenden Erfindung durch ein Verfahren mit den im Anspruch 1 genannten Merkmalen gelöst.

Kern der vorliegenden Erfmdung ist die Übersetzung der serverseitigen IDs der Datenelemente in AGORA-Location-Referenzen, die dann kontextfrei von verschiedenen Empfängern in die jeweils eigenen IDs übersetzt werden können.

Da es zu wenig performant wäre, sämtliche IDs übersetzen zu müssen (von diesen IDs liegen sehr viele vor), werden anstelle dessen nur grenzwertige und strittige Stellen (sogenannte Referenzstellen) AGORA-kodiert und die Enden dieser Referenzen jeweils als Luftlinien zu Polygonen verbunden.

Auf diese Weise kann eine effektive Mischung aus präziser, kontextfreier Beschreibung der Referenzstellen und einfacher polygonaler Verbindung gewählt werden. Dabei ist die "Übersetzung" der vom Server verwendeten IDs in die korrespondierenden IDs der digitalen Karte des Kunden vorgesehen, damit die Änderungen durchgeführt werden können. Die "Übersetzung" entspricht in ihrer Funktion im Kern der Methodik der Location-Referenzierung.

Eine der wesentlichen Eigenschaften der Location-Referenzierung ist es, dass die Location-Referenzen interpretiert werden können, ohne dass sie in Verbindung mit weiteren Datensätzen einer Datenbank gebracht werden müssen. Dies ist dahingehend ein entscheidender Vorteil, dass keine Rücksicht auf eine bestimmte Datenbankstruktur zu nehmen ist.

So besteht eine wesentliche Eigenschaft der AGORA-Location-Referenzierung darin, ein Prinzip zum Bereitstellen einer Location-Referenzierung zu definieren, das stabil gegenüber Datenbankunterschieden (Datenmodell und/oder Dateninhalt) sowohl auf Senderseite als auch auf Empfängerseite ist, wobei Übereinstimmungsraten von zumindest 95 Prozent erzielt werden.

In der Ausgangssituation liegt beim Empfänger eine digitale Karte vor, die keine Detaildaten über einen bestimmten Ort aufweist. Vorzugsweise wird der Aktualisierungsvorgang durch einen Trigger im Wege einer an den Sender, insbesondere an mindestens einen Anbieterserver, gerichteten Anfrage gestartet, ob Datenerhalt zur Änderung, insbesondere zur Einfügung und/oder zur Aktualisierung und/oder zur Ergänzung, möglich ist; zum Beispiel möchte ein Benutzer ein in der aktuellen Straßenliste nicht vermerktes Ziel in der digitalen Karte adressieren.

Hierzu wird ein für ein Update sinnvoller Ausschnitt als Gebiet ausgewählt, das in die Karte des Empfängers eingefügt und/oder aktualisiert und/oder ergänzt werden soll. Dieses Gebiet wird durch ein durch geographische Punkte beschriebenes Polygon festgelegt, wobei das Gebiet sowohl jeweils dem Empfänger als auch dem Sender bekannt ist.

Bei diesem Gebiet kann es sich um die politischen Grenzen eines Gebiets, zum Beispiel eines Bundeslands oder der Stadt Hamburg, oder um die postalischen Grenzen eines Gebiets, zum Beispiel des Postleitzahlengebiets 47110, oder einfach um einen Polygonzug in WGS 84-Koordinaten (WGS 84 = World Geodetic System 1984) handeln.

Beim bevorzugten Beispielszenario eines grundsätzlich eine initiale Anfrage des Empfängers voraussetzenden Pull-Dienstes wird sodann nach der empfängerseitigen Auswahl des Gebiets die Anfrage der Daten zur Änderung, insbesondere zur Einfügung und/oder zur Aktualisierung und/oder zur Ergänzung, der digitalen Karte im ausgewählten Gebiet vom Empfänger an den Sender gesendet. Der Sender antwortet mit den Änderungsdaten, insbesondere mit den Einfügungsdaten und/oder mit den Aktualisierungsdaten und/oder mit den Ergänzungsdaten, die die erfindungswesentlichen nicht-persistenten Referenzstellen zur Änderung, insbesondere zur Einfügung und/oder zur Aktualisierung und/oder zur Ergänzung, der digitalen Karte im ausgewählten Gebiet beinhalten.

Beim alternativen Beispielszenario eines vom Versender initialisierten Push-Dienstes hat der Versender zu einem Gebiet Änderungsdaten, insbesondere Einfügungsdaten und/oder Aktualisierungsdaten und/oder Ergänzungsdaten, neu erstellt. Der Sender oder Versender versendet das Änderungspaket, insbesondere Einfügungspaket und/oder Aktualisierungspaket und/oder Ergänzungspaket, entweder an alle Empfänger frei oder an eine zum Beispiel durch Verschlüsselung autorisierte Gruppe, wie etwa bei Broadcast-Diensten oder beim Bezahlfemsehen bzw. Pay T[ele]V[ision], zum Beispiel bei PREMIERE.

Im Ergebnis erfolgt also das Senden der Referenzstellen an den Empfänger unter Verwendung von kontextfreien Daten und das Senden der Detailinformationen des ausgewählten Gebiets unter Verwendung eines dem Sender und dem Empfänger bekannten Datenformats. Der Empfänger fügt anschließend wenigstens eines der Teile der vom Sender gesendeten Detailinformationen in die digitale Karte des Empfängers innerhalb des ausgewählten Gebiets ein, womit das Update abgeschlossen ist.

In einer bevorzugten Ausgestaltung der vorliegenden Erfindung ist vorgesehen, dass der Empfänger die empfangenen Detailinformationen in seine digitale Karte überträgt, indem der Empfänger an den Stütz- bzw. Referenzpunkten des Polygons beginnt und sukzessive an benachbarten Punkten fortfährt.

Alternativ können diese Anfangspunkte auch mit den Referenzstellen als Schnittpunkt zwischen in das ausgewählte Gebiet hineinlaufenden Straßen und den Seitenlinien des Polygons zusammenfallen.

Durch dieses Vorgehen wird sichergestellt, dass in den besonders relevanten Bereichen die alte und die aktualisierte Karte auf wohl definierte Weise ineinander übergehen.

Der Prozess des Einpassens geschieht dabei in der Reihenfolge, dass zunächst alle Location-Referenzen in der Karte als Stützpunkte untergebracht werden. Im Anschluss werden die Luftlinienverbindungen zwischen den Locations als Schnitte in der Karte untergebracht.

Straßen, die Verbindungen in das resultierende Polygon hinein oder aus dem resultierenden Polygon heraus darstellen, werden gegebenenfalls mit entsprechenden Schnittpunkten versehen.

Nun wird von den Locations aus beginnend der Ausschnitt nach innen ersetzt, das heißt sämtliche bekannten Straßen werden inhaltlich korrigiert, gelöscht oder hinzugefügt. Dabei wird ein offengelegtes Datenformat, wie zum Beispiel GDF (= Geographic Data File) verwendet, um die Detailkarte mit ihren Informationen, wie Flächen, Generalisierungsleveln und Straßenattributen, zu übertragen.

Verlässt eine der Straßen geographisch das durch die Stütz- bzw. Referenzpunkte oder durch die Schnittpunkte bestimmte Gebiet, wird die Korrektur am entsprechenden Punkt abgebrochen.

Durch das hier vorgeschlagene Verfahren ist es möglich, die Änderung und/oder Einfügung und/oder Aktualisierung und/oder Ergänzung einer digitalen Karte ohne hohen administrativen Aufwand durchzuführen. Die genaue Kenntnis der internen Repräsentationsform von Detailinformationen auf Empfängerseite wird nicht benötigt.

Durch den Einsatz der Location-Referenzen werden im Grunde die persistenten eindeutigen Identifikatoren auf Senderseite in solche der Empfängerseite übersetzt.

Insbesondere ist bevorzugt, dass die Referenzstellen in Form von AGORA-Location-Referenzen an den Empfänger gesendet werden.

Weitere vorteilhafte Ausgestaltungen und zweckmäßige Weiterbildungen der vorliegenden Erfindung ergeben sich aus den übrigen, in den abhängigen Ansprüchen gekennzeichneten Merkmalen.

### Kurze Beschreibung der Zeichnungen

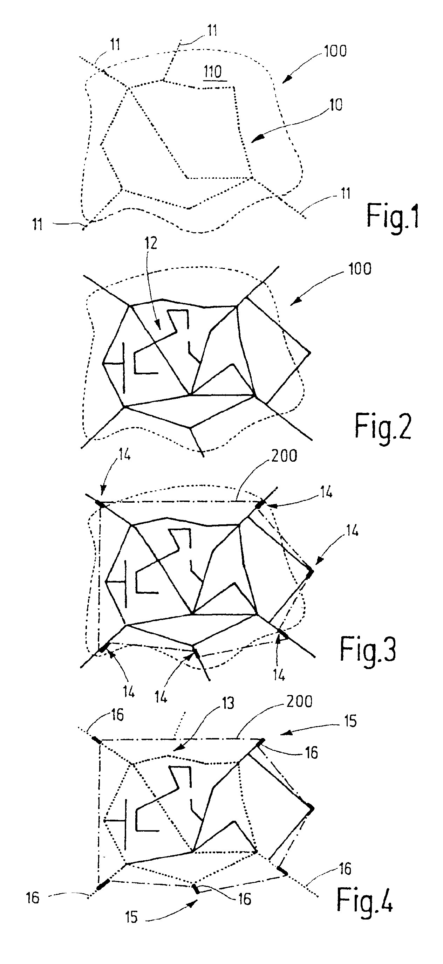

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend anhand des durch die Figuren 1 bis 4 veranschaulichten Ausführungsbeispiels näher erläutert:

Es zeigt:
Fig. 1 einen schematischen Ausschnitt aus einer digitalen Karte des Empfängers vor dem Empfang von Detailinformationen;
Fig. 2 einen schematischen Ausschnitt aus einer digitalen Karte des Senders mit den dem Sender zur Verfügung stehenden Detailinformationen;
Fig. 3 schematisch ein ausgewähltes Gebiet in Form eines Polygons mit eingefügten Detailinformationen und Referenzstellen; und
Fig. 4 schematisch das ausgewählte Gebiet in Form eines Polygons mit Detailinformationen und Verbindungen mit der übrigen digitalen Karte des Empfängers.

### Bester Weg zur Ausführung der Erfindung

Ein Empfänger verfügt über eine nicht den erforderlichen Detaillierungsgrad aufweisende digitale Karte mit Bereichen. Gleichzeitig verfügt eine nicht dargestellte digitale Karte eines Senders über den gewünschten Detaillierungsgrad. Bei dem Sender handelt es sich beispielsweise um einen Anbieter von Kartenaktualisierungen, -einfügungen und - ergänzungen.

Der Empfänger kommuniziert zur Änderung, insbesondere zur Aktualisierung, zur Einfügung und/oder zur Ergänzung, von Detailinformationen in den gewünschten Bereichen mit dem Sender. Fig. 1 zeigt einen Ausschnitt mit der Begrenzungslinie 100 aus einer digitalen Karte des Empfängers mit einem Bereich 110, der nicht über die gewünschte Detailgenauigkeit verfügt. Der Datenbestand bezieht sich lediglich auf ein Netz 10 von Hauptstraßen.

Der (nicht dargestellte) Empfänger richtet eine Anfrage an den Sender, wobei er mittels der geographischen Begrenzungslinie 100 den Bereich definiert, für den genauere Detaildaten übertragen werden sollen. Dabei schneiden verschiedene Hauptstraßen 11 die Bereichsgrenze.

Der Sender verfügt dabei über Informationen über den Bereich 110 mit einem in Fig. 2 dargestellten Detaillierungsgrad, wobei sich der Datenbestand auch auf Datenelemente wie Nebenstraßen 12, nicht dargestellte Grundflächen oder dergleichen bezieht.

Der Sender wählt einen Ausschnitt 200 in Form eines Polygons, dessen Eckpunkte 14 Referenzstellen sind, die sich durch kontextfreie, nicht persistente oder on-the-fly-Referenzen, wie zum Beispiel AGORA-Referenzen, darstellen lassen.

In diesem Zusammenhang kann unter "on-the-fly" die Eigenschaft der Location-Referenzen verstanden werden, dass sie jederzeit ohne weitere Voraussetzungen generiert werden können; dementsprechend kann der Begriff "nicht-persistent" bzw. "on-the-fly" auch "keine Persistenz voraussetzend" bedeuten.

So wird beim Prinzip der on-the-fly-Kodierung vom Sendersystem ein Code nur im Bedarfsfalle bereitgestellt; dieser Code wird in einer Nachricht verwendet, die vom Empfängersystem interpretiert und dann verworfen wird.

Typischerweise fallen die gewählten Location-Referenzen mit Straßenverläufen zusammen, wie in Fig. 3 dargestellt, wobei die Straßen durch das Polygon 200 nicht quer zur Fahrbahn, sondern längs der Fahrbahn geschnitten werden, wodurch sich eine bessere Wiederauffindbarkeit in der Empfängerkarte ergibt.

Nach Übertragung der das Polygon 200 definierenden Location-Referenzen 14 an den Empfänger werden die Detailinformationen mit all ihren Informationen über Flächen, Generalisierungslevel und Straßenattributen in einem dem Sender und dem Empfänger bekannten Datenformat, wie zum Beispiel dem ISO-Standard Geographic Data Files (GDF), gesendet.

Der Empfänger integriert in seiner digitalen Karte die das Polygon 200 definierenden Location-Referenzen 14, indem er die Location-Referenzen 14 in sein internes Repräsentationsschema durch die Berechnung persistenter Identifikatoren übersetzt. Die Location-Referenzen als solche werden verworfen.

Der Empfänger berechnet danach die durch die Eckpunkte 14 definierten Seitenlinien des Polygons 200. Dabei ergeben sich Schnittpunkte zwischen den Seitenlinien und den außerhalb der Polygonfläche 200 angeordneten Straßen.

Die Übertragung der Detailinformationen in die digitale Karte des Empfängers wird an den durch Location-Referenzen gegebenen Eckpunkten 14 des Polygons 200 begonnen und in das Innere des durch das Polygon 200 definierten Bereichs sukzessiv fortgefiihrt, indem nacheinander Identifikatoren berechnet und eingetragen werden, die auf die bereits vorhandenen Identifikatoren Bezug nehmen.

Dabei werden nicht nur neue Datenelemente in der digitalen Karte des Empfängers aufgenommen, sondern auch bereits vorhandene gelöscht, wenn diese nicht mehr aktuell sind. Ist eine Straße 13 nicht mehr vorhanden oder steht eine Straße temporär oder persistent nicht (mehr) zur Verfügung, so erfolgt die Löschung der entsprechenden Datenelemente.

An begrenzenden und strittigen Stellen ist das umgebende Polygon 200 durch Location-Referenzen unterbrochen. Fig. 4 zeigt die digitale Karte des Empfängers nach deren Korrektur, bei der sichergestellt wird, dass die Anschlüsse 16 an die Straßen des außerhalb des Polygons 200 liegenden Restgebiets an die geänderten und/oder eingefügten und/oder aktualisierten und/oder ergänzten Datenelemente in wohldefinierter Weise angepasst sind.

Anschlüsse 15 zeigen Straßen, des innerhalb des Gebiets hinzugefügt wurden und an den Anschlüssen enden, denn hier weist die digitale Karte des Empfängers kein Straßennetz auf. Sollte eine dieser Straßen im weiteren Verlauf der Nutzung der Karte benötigt werden, kann das hier beschriebene Verfahren erneut angewendet werden.

Am Ende der Durchführung des erfindungsgemäßen Verfahrens stehen dem Empfänger geographische Informationen mit dem gewünschten Detaillierungsgrad zur Verfügung.

## Patentansprüche

1. Verfahren zum Einfügen und/oder zum Aktualisieren und/oder zum Ergänzen von Detailinformationen in einer digitalen Karte mindestens eines Empfängers, der zum Kommunizieren mit mindestens einem Sender ausgelegt ist,
**gekennzeichnet durch** folgende Schritte:
[a] Defmieren, insbesondere Auswählen, mindestens eines in die Karte des Empfängers einzufügenden und/oder in der Karte des Empfängers zu aktualisierenden und/oder in der Karte des Empfängers zu ergänzenden Gebiets (110), das insbesondere
[a.1] **durch** mindestens einen Ausschnitt mit mindestens einer Begrenzungslinie (100) beschrieben wird und/oder
[a.2] sowohl dem Sender als auch dem Empfänger bekannt ist;
[b] Senden der Detailinformationen des definierten Gebiets (110), insbesondere der Gebietsbeschreibung mittels Referenzstellen (14) und/oder mittels des **durch** die Referenzstellen (14) defmierten Polygons (200), an den Empfänger unter Verwendung
[b.1] von insbesondere kontextfreien Daten und/oder
[b.2] mindestens eines sowohl dem Sender als auch dem Empfänger bekannten Datenformats;
[c.1] Einfügen zumindest eines Teils der vom Sender gesendeten Detailinformationen in die Karte des Empfängers innerhalb des definierten Gebiets (110) und/oder
[c.2] Aktualisieren zumindest eines Teils der Detailinformationen in der Karte des Empfängers mittels der vom Sender gesendeten Detailinformationen innerhalb des definierten Gebiets (110) und/oder
[c.3] Ergänzen zumindest eines Teils der Detailinformationen in der Karte des Empfängers mittels der vom Sender gesendeten Detailinformationen innerhalb des definierten Gebiets (110).

2. Verfahren gemäß Anspruch 1, **dadurch gekennzeichnet**,
[i] dass vor dem Schritt [a] des Definierens des Gebiets (110) mindestens eine Anfrage des Empfängers an den Sender erfolgt, in welcher Anfrage im Wesentlichen das Gebiet (110) bestimmt wird, für das Detailinformationen gesendet werden sollen, und/oder
[ii] dass der Empfänger bereits Referenzstellen definiert und/oder
[iii] dass mindestens eine andere Methode einer sowohl dem Sender als auch dem Empfänger bekannten Beschreibung eines Gebiets, wie mindestens ein Postleitzahlengebiet oder mindestens eine politische Grenze, verwendet wird.

3. Verfahren gemäß Anspruch 1 oder 2, **dadurch gekennzeichnet, dass** zum Einfügen und/oder zum Aktualisieren und/oder zum Ergänzen der Detailinformationen mindestens ein vom Empfänger initiierter Pull-Dienst vorgesehen ist, wobei insbesondere
- das in die Karte des Empfängers einzufügende und/oder in der Karte des Empfängers zu aktualisierende und/oder in der Karte des Empfängers zu ergänzende Gebiet (110) seitens des Empfängers defmiert wird,
- der Empfänger zwischen dem Schritt [a] und dem Schritt [b] mindestens eine Anfrage hinsichtlich des senderseitigen Vorliegens von für das definierte Gebiet (110) einzufügenden und/oder zu aktualisierenden und/oder zu ergänzenden Daten an den Sender richtet und
- der Sender diese Anfrage mit für das defmierte Gebiet (110) einzufügenden und/oder zu aktualisierenden und/oder zu ergänzenden Daten beantwortet, wobei diese Daten zum Beispiel nicht-persistente Referenzstellen zum Einfügen und/oder zum Aktualisieren und/oder zum Ergänzen der Karte beinhalten können.

4. Verfahren gemäß mindestens einem der Ansprüche 1 bis 3, **dadurch gekennzeichnet, dass** zum Einfügen und/oder zum Aktualisieren und/oder zum Ergänzen der Detailinformationen mindestens ein vom Sender initiierter Push-Dienst vorgesehen ist, wobei insbesondere
- das in die Karte des Empfängers einzufügende und/oder in der Karte des Empfängers zu aktualisierende und/oder in der Karte des Empfängers zu ergänzende Gebiet (110) seitens des Senders definiert wird, zum Beispiel wenn der Sender für das Gebiet (110) einzufügende und/oder zu aktualisierende und/oder zu ergänzende Daten neu erstellt, und
- der Sender die für das definierte Gebiet (110) einzufügenden und/oder zu aktualisierenden und/oder zu ergänzenden Daten, zum Beispiel in Paketform,
-- an sämtliche Empfänger frei versendet oder
-- an mindestens eine, zum Beispiel durch Kodierung und/oder durch Verschlüsselung autorisierte, Gruppe von Empfängern versendet.

5. Verfahren gemäß mindestens einem der Ansprüche 1 bis 4, **dadurch gekennzeichnet, dass** der Empfänger die vom Sender gesendeten Detailinformationen in seine Karte überträgt, indem
- an den Stütz- oder Referenzpunkten (14) des Polygons (200) oder
- an den Schnittstellen zwischen in das definierte Gebiet (110) hineinlaufenden Straßen und an den Seitenlinien des Polygons (200) begonnen und sukzessive an benachbarten Punkten fortgefahren wird.

6. Verfahren gemäß mindestens einem der Ansprüche 1 bis 5, **dadurch gekennzeichnet, dass** die geographischen Punkte in Form von AGORA-Location-Referenzen (AGORA = implementation of global location referencing approach) an den Empfänger gesendet werden.

7. Verfahren gemäß mindestens einem der Ansprüche 1 bis 6, **dadurch gekennzeichnet, dass** die Detailinformationen des defmierten Gebiets (110) im GDF-Format (GDF = Geographic Data File) gesendet werden oder dass die Daten in einem sowohl dem Sender als auch dem Empfänger bekannten Format übertragen werden.

8. Verfahren gemäß mindestens einem der Ansprüche 1 bis 7, **dadurch gekennzeichnet, dass** Stützstellen aus Koordinaten mit Referenzstellen gemeinsam das Polygon (200) beschreiben.

9. Verfahren gemäß mindestens einem der Ansprüche 1 bis 8, **dadurch gekennzeichnet, dass** das Polygon (200) zum Abschneiden der vom Sender nicht referenzierten Daten verwendet wird.

10. Verfahren gemäß mindestens einem der Ansprüche 1 bis 9, **dadurch gekennzeichnet, dass** vom Sender angebotene Gebiete direkt aneinander grenzen und deren benachbarte Referenzstellen wieder verwendet werden können, um direkt anzuschließen.
